# EUROPÄISCHE PATENTANMELDUNG

(11) **EP 0 558 071 A1**
(43) Veröffentlichungstag der Anmeldung: **01.09.1993**
(21) Anmeldenummer: 93103135.5
(22) Anmeldetag: 26.02.1993
(51) Int. Cl.: F16L 9/18, F16L 7/00

(54) **Koaxialrohr**

(30) Priorität: 27.02.1992 DE 4206096
(71) Anmelder: WOCO Franz-Josef Wolf & Co., D-63628 Bad Soden-Salmünster (DE)
(72) Erfinder: Wolf, Franz Josef, W-6483 Bad Soden-Salmünster (DE); Reichert, Uwe, W-6490 Schlüchtern (DE)
(74) Vertreter: Jaeger, Klaus, Dr.

(57) **Zusammenfassung**

Die Erfindung betrifft ein formsteif-biegeelastisches Koaxialrohr aus Kunststoff für Fluide, insbesondere für pneumatische Stell- und Steuersysteme, bestehend aus einem Außenrohr (1) und mindestens einem in diesem hermetisch fluiddicht getrennt angeordneten Innenrohr (5), das druch angeformte Abstandshalter (3) zwischen den Teilrohren zumindest im wesentlichen koaxial zum Außenrohr gehalten ist, bei dem jeder einzelne der Abstandshalter dergestalt an jeweils nur einem der beiden Teilrohre angeformt und so konfiguriert und ausgerichtet ist, daß das Außenrohr und das Innenrohr zumindest begrenzt frei axial gegeneinander verschiebbar sind.

Das Verfahren zur Herstellung des Koaxialrohres sieht vor, daß das Innenrohr, insbesondere durch Extrudieren vorgefertigt, abgekühlt und dann das Außenrohr in situ um das Innenrohr herum, insbesondere durch koaxiale Mantelextrusion, geformt wird.

## Beschreibung

Die Erfindung betrifft ein Koaxialrohr nach dem Oberbegriff des Anspruchs 1, dessen Verwendung sowie ein Verfahren zu dessen Herstellung.

Ein bekanntes extrudiertes Koaxialrohr dieser Art ist einstückig geformt. Das Innenrohr ist mit dem Außenrohr durch dazwischenliegende Abstandshalter, die als axiale Längsrippen angeformt sind, fest verbunden. Dieses gattungsgemäße Koaxialrohr wird beispielsweise in pneumatischen Stell- und Steuersystemen verwendet und verbindet die von Betätigungselementen räumlich getrennten Stell- und Steuerelemente. Speziell für diese Anwendungsgebiete muß das Koaxialrohr hermetisch und zuverlässig fluiddicht und druckfest sein. Dabei muß nicht nur das Außenrohr nach außen hin fluiddicht sein, sondern muß auch das Innenrohr dicht gegenüber dem Außenrohr sein.

Weiterhin ist bekannt, zur Beaufschlagung bifunktionaler fluidischer Stellelemente extrudierte Zwillingsleitungen mit achsparallelen Teilrohren zu verwenden, die über eine Zwischenwand fluidisch voneinander getrennt und mechanisch miteinander verbunden sind.

Derartige Zwillings- und Koaxialrohre werden unter anderem auch im Bereich der Kraftfahrzeugtechnik eingesetzt und finden zur Betätigung bzw. Steuerung von mit Druck oder Unterdruck gesteuerten ein- oder mehrfunktionalen, pneumatisch beaufschlagten Stell- und Steuerelementen Verwendung. Insbesondere im Bereich der Zentralverriegelung ist der Einsatz derartiger Zwillings- und/oder Koaxialrohre zweckmäßig, denn hier muß nicht nur der zum gleichzeitigen Öffnen und Schließen aller Türen eines Fahrzeuges benötigte Stelldruck, sondern auch der aus Diebstahlssicherungsgründen nötige Steuerdruck bereitgestellt werden.

In der Kraftfahrzeugtechnik werden immer mehr Funktionen des Kraftfahrzeugs elektrisch, pneumatisch oder hydraulisch ferngesteuert. Dies hat zur Folge, daß immer mehr Kabel, Rohre und Leitungen benötigt werden, um die betreffenden Funktionen auszuführen und zu kontrollieren. Da aber gleichzeitig der vorhandene Raum für die Führung derartiger Kabel und Leitungen begrenzt ist, ist häufig eine Kabel- oder Rohrführung mit kleinen Krümmungsradien unumgänglich. Wenn die Krümmungen ein gewisses durch die Elastizität der verwendeten Kunststoffe bestimmtes Maß unterschreiten, treten an den Biegestellen der bekannten einstückig extrudierten mehrfunktionalen Kunststoffrohre, d.h. an den bekannten Koaxialrohren und verbundenen Zwillingsleitungen, Haarrisse auf, die zu Leckagen und Fehlfunktionen führen.

Bei der Benutzung von Zwillingsleitungen, stellt sich weiterhin das Problem, daß die Größe der verfügbaren Durchführungen in einem Kraftfahrzeug nicht mehr für die in großer Anzahl verwendeten Leitungen bzw. Rohre ausreicht. Der für die Durchführungen zur Verfügung stehende Durchmesser ist durch konstruktionsbedingte Vorgaben beschränkt und kann nicht beliebig vergrößert werden.

Ausgehend von diesem Stand der Technik ist es die Aufgabe der vorliegenden Erfindung, ein formsteif-biegeelastisches Koaxialrohr aus Kunststoff für Fluide bereitzustellen, das bei guter Flexibilität zuverlässig druckfluiddicht herstellbar ist und auch dann noch absolut dicht bleibt, wenn es mit kleinen Radien gebogen wird, so daß auch unter ungünstigen Umständen eine hermetische fluidische Trennung der beiden Teilrohre voneinander gewährleistet ist.

Diese Aufgabe wird durch ein Koaxialrohr gemäß der Lehre des Anspruchs 1 gelöst.

Vorteilhafte Ausgestaltungen der Erfindung sind Gegenstand der Unteransprüche.

Das Koaxialrohr gemäß der vorliegenden Erfindung weist ein fluiddichtes Außenrohr und ein fluiddichtes Innenrohr sowie Abstandshalter zwischen den beiden genannten Rohren auf, die das Innenrohr zumindest im wesentlichen koaxial im Außenrohr halten. Das Außenrohr ist vom Innenrohr hydrodynamisch hermetisch fluiddicht getrennt. Nach einem wesentlichen Merkmal der Erfindung sind das Außenrohr und das Innenrohr nun aber auch physikalisch voneinander getrennt, da jeder einzelne Abstandshalter jeweils nur entweder am Außenrohr oder am Innenrohr angeformt ist. Dabei sind die Abstandshalter immer so konfiguriert angeformt und ausgerichtet, daß das Innenrohr und das Außenrohr zumindest begrenzt axial frei gegeneinander verschiebbar sind. Die axiale Verschiebbarkeit der zwei Teilrohre gegeneinander kann beispielsweise dadurch begrenzt werden, daß sich die Abstandshalter axial hintergreifen.

Diese mechanische Lösung des Innenrohres vom Außenrohr hat insbesondere den Vorteil, daß beim Biegen des Koaxialrohres zwischen Innenrohr und Außenrohr keine Spannungskonzentrationen entstehen, wie dies bei durch die Abstandshalter fest verbundenen Außen- und Innenrohren der Fall ist. Damit wird auch das Entstehen der Haarrisse in den Rohrwänden vermieden und somit die Zuverlässigkeit und Funktionssicherheit des Koaxialrohres gewährleistet.

Das erfindungsgemäße Koaxialrohr besteht aus einem Kunststoff, der so geschmeidig ist, daß das Koaxialrohr auch ohne Funktionsbeeinträchtigung Biegungen mit kleinerem Krümmungsradius unterzogen werden kann.

Gemäß einer bevorzugten Ausführungsform der Erfindung sind die Abstandshalter als achsparallele Längsrippen geformt und radial vorspringend zwischen Innenrohr und Außenrohr angeordnet.

Die Längsrippen können auch so angeordnet sein, daß sie vom Außenrohr ausgehend so verlaufen, daß nicht ihre radial inneren Kanten am Innenrohr anliegen, zumindest mit einem schmalen Toleranzabstand anliegen, sondern ihre Seitenflanken das Innenrohr tangential unter tangentialer Vorspannung berühren. Dadurch wird das Innenrohr zentriert und federnd im Außenrohr gelagert. Ein ähnlicher Federeffekt kann auch durch eine in radialer Richtung spiralförmige Ausgestaltung der Längsrippen erreicht werden.

Gemäß einer vorteilhaften Ausgestaltung der Erfindung sind die Abstandshalter als Noppen ausgebildet, die die Form einer Halbkugel oder eines Abschnitts einer Kugel besitzen. Die runde Form an der Stelle, an der der Abstandshalter das nicht damit verbundene Teilrohr berührt oder wenigstens fast berührt, hat den Vorteil, daß einer axialen Verschiebung des Innenrohres gegen das Außenrohr wenig Reibungswiderstand entgegengesetzt wird, und zwar trotz einer besonders stabilen radialen Lagerung des Innenrohres. Nach einem weiteren Ausführungsbeispiel der Erfindung können die Abstandshalter auch Rippen sein, die auf Schraubenlinien oder auf einer axialen Folge von Kreislinien verlaufen.

Gemäß einer weiteren bevorzugten Ausführungsform der Erfindung weisen die Abstandshalter in Umfangsrichtung des Koaxialrohres gleiche Winkelabstände voneinander auf. Dies hat den Vorteil, daß neben der dadurch erfolgenden gleichmäßigen Zentrierung des Innenrohres im Außenrohr die Kräfte- bzw. Spannungsverteilung beim Biegen des Koaxialrohres gleichmäßig erfolgt und dadurch eine homogene Biegeelastizität des Koaxialrohres in allen Richtungen erreicht wird. Demzufolge gibt es keine Richtungen, in der das Rohr leichter oder schwerer gebogen oder in anderer Weise verformt werden kann.

Gemäß einem weiteren Ausführungsbeispiel der Erfindung sind entweder alle Abstandshalter an der Innenmantelfläche des Außenrohres angeformt und erstrecken sich zumindest im wesentlichen in radialer Richtung auf die Außenmantelfläche des Innenrohres hin, oder alle Abstandshalter sind an der Außenmantelfläche des Innenrohres angeformt und erstrecken sich radial in Richtung auf die Innenmantelfläche des Außenrohres hin oder mit höchstens kleinen Winkelabweichungen dazu. Vorteilhaft an einer Anformung aller Abstandshalter an nur einem der beiden Teilrohre ist die Tatsache, daß das Innenrohr gegen das Außenrohr dadurch sowohl frei axial verschiebbar als auch frei verdrehbar ist. Eine derartige Anordnung der Abstandshalter ermöglicht also eine maximale axiale Verschiebbarkeit der beiden Teilrohre relativ zueinander und vermindert dadurch das Auftreten inhomogener Spannungskonzentrationen beim Biegen des Koaxialrohres.

Von Vorteil kann es sein, die Abstandshalter in Umfangsrichtung des Koaxialrohres in alternierender Folge an der Innenmantelfläche des Außenrohres und an der Außenmantelfläche des Innenrohres anzuformen, wobei sich jeweils jeder der Abstandshalter vorzugsweise in im wesentlichen radialer Richtung von dem Teilrohr, an dem er angeformt ist, zudem nicht mit diesem Abstandshalter verbundenen Teilrohr hin erstreckt. Die axiale Verschiebbarkeit wird hierdurch nicht beeinträchtigt, während gleichzeitig eine Art Verdrehsicherung des Innenrohres gegenüber dem Außenrohr erreicht wird.

Eine axiale Verschiebewegbegrenzung der Teilrohre gegeneinander kann dadurch erreicht werden, daß die an der Innenmantelfläche des Außenrohres und die an der Außenmantelfläche des Innenrohres angeformten Abstandshalter so angeordnet sind, daß sie sich axial hinterschneiden bzw. hintergreifen. Dadurch kann die axiale Verschiebbarkeit des Außenrohres gegenüber dem Innenrohr begrenzt werden, ohne gleichzeitig die für die freie axiale Verschiebbarkeit notwendige Gleitfähigkeit zwischen Abstandshalter und nicht damit verbundenem Teilrohr zu beeinträchtigen.

Bei dem erfindungsgemäßen Verfahren wird zunächst das Innenrohr, vorzugsweise durch Extrudieren, separat hergestellt und abgekühlt. Erst im Anschluß daran wird das Außenrohr in einer zweiten Extrudierstation in Stranglaufrichtung um das Innenrohr herum geformt, wobei insbesondere die Technik der koaxialen Mantelextrusion verwendet wird. Es wird also nach Art der Herstellung einer Kabelummantelung zunächst das der Seele entsprechende Innenrohr vorgefertigt und anschließend das dem Mantel entsprechende Außenrohr darum herum extrudiert. Da das Innenrohr nicht von Anfang an vom Außenrohr umgeben ist, kann das zunächst gefertigte Innenrohr nach dem Ausgang aus dem Extruder abgekühlt werden, eventuell mit einer speziellen Beschichtung, insbesondere zur Erhöhung der Gleitfähigkeit, versehen werden und ist daher in jedem Fall bereits ausreichend kalt und fest, so daß beim anschließenden Formen des Außenrohres um das Innenrohr herum weder die Wandstärke des Innenrohres verändert bzw. geschwächt werden, noch das Außenrohr am Innenrohr verkleben kann. Das gleiche gilt auch für die Abstandshalter, die sowohl am Außenrohr als auch am Innenrohr angeformt sein können. Sind also alle oder ein Teil der Abstandshalter am Innenrohr angeformt, so werden diese bei der Abkühlung mitgekühlt und können ebenfalls nicht mit dem Außenrohr mit eventuell daran angeformten Abstandshaltern verkleben.

Die Erfindung ist im folgenden anhand von Ausführungsbeispielen in Verbindung mit den nicht maßstäblichen Zeichnungen näher erläutert. Es zeigen:
- Fig. 1: im Querschnitt ein Ausführungsbeispiel des Koaxialrohres mit nur am Außenrohr angeformten, als Längsrippen ausgebildeten Abstandshaltern;
- Fig. 2: im Querschnitt ein weiteres Ausführungsbeispiel des Koaxialrohres mit alternierend am Innen- und Außenrohr angeformten, als Längsrippen ausgebildeten Abstandshaltern;
- Fig. 3: im Querschnitt ein weiteres Ausführungsbeispiel des Koaxialrohres, bei dem die als Noppen ausgebildeten Abstandshalter axial gegeneinander versetzt im Außenrohr angeformt sind; und
- Fig. 4: im Querschnitt ein weiteres Ausführungsbeispiel des Koaxialrohres, bei dem die auf Kreislinien verlaufenden Rippen alternierend am Außenrohr und am Innenrohr angeformt sind.

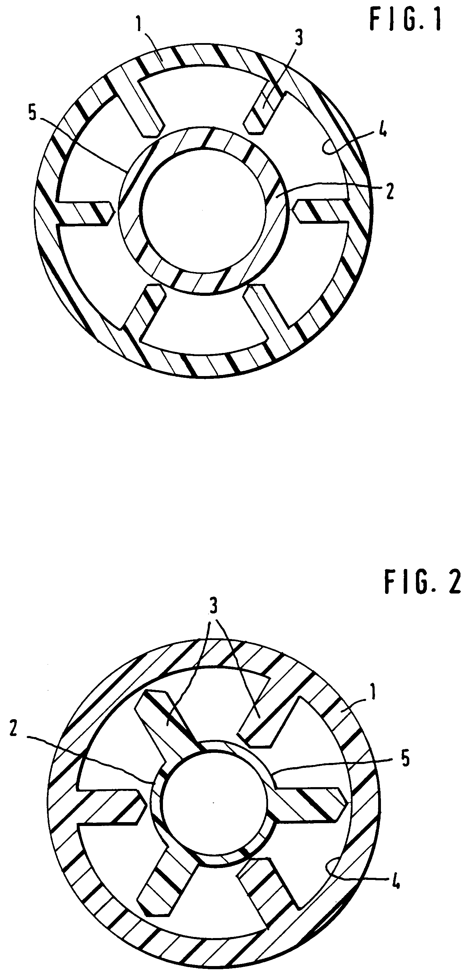

In Fig. 1 ist im Querschnitt ein Ausführungsbeispiel eines Koaxialrohres gemäß der vorliegenden Erfindung gezeigt. Die in diesem Beispiel sechs Abstandshalter 3 sind alle am Außenrohr 1 angeformt und erstrecken sich von der Innenmantelfläche 4 des Außenrohres 1 in radialer Richtung zur Außenmantelfläche 5 des Innenrohres 2 hin. Die der Außenmantelfläche 5 des Innenrohres 2 zugewandten Kanten der als Längsrippen ausgebildeten Abstandshalter 3 sind hier gratartig scharfkantig zulaufend dargestellt, können durchaus aber auch stumpf oder angefast ausgebildet sein. Der Abstand zwischen den mehr oder minder abgerundeten Abstandshaltern 3 und dem Innenrohr 2 ist so gewählt, daß auf der einen Seite das Innenrohr 2 axial frei im Außenrohr 1 verschiebbar ist, andererseits aber auch kein zu großer Spalt zwischen den Abstandshaltern 3 und der Außenmantelfläche 5 des Innenrohres 2 entsteht. Die Abmessungen der Wandstärken des Außenrohres 1, des Innenrohres 2 und der Abstandshalter 3 sind so bemessen, daß sowohl eine hohe Flexibilität des Koaxialrohres als auch die absolute Trennung des Außenrohres 1 vom Innenrohr 2 gewährleistet ist. Durch Variation der Stärke und Anzahl der Abstandshalter 3 und der Wandstärken des Innenrohres 2 und des Außenrohres 1 kann auch der für die Herstellung des Koaxialrohres notwendige Materialverbrauch beeinflußt werden, was sich wiederum auf die Herstellungs- und Produktionskosten auswirkt.

In der Fig. 2 ist im Querschnitt ein weiteres Ausführungsbeispiel des Koaxialrohres gezeigt, das ebenso wie die in Fig. 1 dargestellte Ausführungsform nicht maßstäblich dargestellt ist. Die als Längsrippen ausgebildeten Abstandshalter 3 sind abwechselnd an der Außenmantelfläche 5 des Innenrohres 2 und an der Innenmantelfläche 4 des Außenrohres 1 angeformt und erstrecken sich jeweils in radialer Richtung nach außen bzw. nach innen auf das Außenrohr 1 bzw. auf das Innenrohr 2 hin. Das Verhältnis der Durchmesser vom Außenrohr 1 und Innenrohr 2 ist nicht maßstäblich dargestellt. Auch die Form der nicht mit einem der beiden Teilrohre 1 oder 2 verbundenen Abstandshalter 3 kann von der in der Darstellung gezeigten konisch stumpf zulaufenden Form abweichen. Durch die alternierende Anbringung der Abstandshalter 3 am Innenrohr 2 und am Außenrohr 1 wird die axiale Verschiebbarkeit der beiden Teilrohre gegeneinander nicht beeinträchtigt, während die Verdrehbarkeit begrenzt wird.

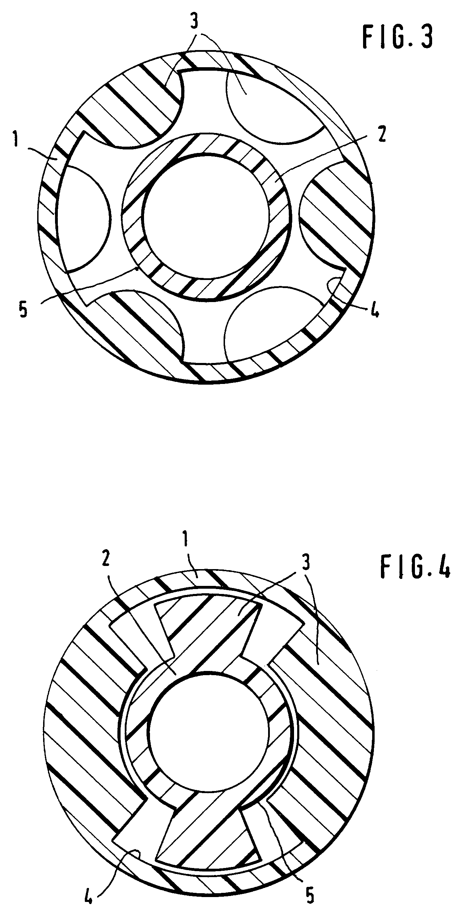

Abbildung 3 zeigt ein Koaxialrohr, dessen Abstandshalter 3 alle am Außenrohr 1 angeformt sind. Die Abstandshalter 3 sind als fast halbkugelförmige oder kugelkappenförmige Noppen ausgebildet. Diese Noppen können so angeordnet sein, daß z.B. jeweils die Hälfte der Noppen in einer ersten Winkelstellung mit gleichem Winkelabstand zueinander auf einer ersten Folge von Umfangskreislinien angeordnet sind, während die andere Hälfte der Noppen auf einer dazu versetzten zweiten Winkelstellung auf einer zweiten Folge von axial beabstandeten Umfangskreislinien angeordnet sind. Die Noppen können bei dem Ausführungsbeispiel nach Fig. 3 auch auf mehr als zwei zueinander versetzten Folgen von Winkelstellungen angeordnet werden.

In Fig. 4 sind die Abstandshalter 3 in dem im Querschnitt dargestellten Ausführungsbeispiel alternierend am Außenrohr 1 und am Innenrohr 2 angeformt und als in der Radialebene des Koaxialrohres ausgerichtete Kreisringscheibensegmente ausgebildet. In der in Fig. 4 gezeigten Winkelstellung des Innenrohres 2 relativ zum Außenrohr 1 ist das Innenrohr 2 im Außenrohr 1 axial frei verschiebbar. Nach einer Drehung um 90° treten dagegen die beiden Serien von Abstandshaltern in einen axialen Hintergriff, so daß der axiale Verschiebeweg der beiden Teilrohre 1,2 gegeneinander begrenzt ist, ohne dabei jedoch gegen den Wert Null zu gehen.

## Patentansprüche

1. Formsteif-biegeelastisches Koaxialrohr aus Kunststoff für Fluide, insbesondere für pneumatische Stell- und Steuersysteme, bestehend aus einem Außenrohr und mindestens einem in diesem hermetisch fluiddicht getrennt angeordneten Innenrohr, das durch angeformte Abstandshalter zwischen den Teilrohren zumindest im wesentlichen koaxial zum Außenrohr gehalten ist,
dadurch **gekennzeichnet**,
daß jeder einzelne der Abstandshalter (3) dergestalt an jeweils nur einem der beiden Teilrohre (1,2) angeformt und so konfiguriert und ausgerichtet ist, daß das Außenrohr (1) und das Innenrohr (2) zumindest begrenzt frei axial gegeneinander verschiebbar sind.

2. Koaxialrohr nach Anspruch 1,
dadurch **gekennzeichnet**,
daß die Abstandshalter (3) achsparallele Längsrippen sind.

3. Koaxialrohr nach Anspruch 1,
dadurch **gekennzeichnet**,
daß die Abstandshalter (3) kugelkappenförmige oder halbkugelförmige Noppen sind.

4. Koaxialrohr nach Anspruch 1,
dadurch **gekennzeichnet**,
daß die Abstandshalter (3) auf Schraubenlinien oder einer axialen Folge von Kreislinien verlaufende Rippen sind.

5. Koaxialrohr nach einem der Ansprüche 1 bis 4,
dadurch **gekennzeichnet**,
daß die Abstandshalter (3) in Umfangsrichtung des Koaxialrohres gleiche Winkelabstände voneinander aufweisen.

6. Koaxialrohr nach einem der Ansprüche 1 bis 5,
dadurch **gekennzeichnet**,
daß alle Abstandshalter (3) an der Innenmantelfläche (4) des Außenrohres (1) angeformt sind und sich zumindest im wesentlichen radial in Richtung auf die Außenmantelfläche (5) des Innenrohres (2) hin erstrecken, oder umgekehrt, alle Abstandshalter (3) an der Außenmantelfläche (5) des Innenrohres (2) angeformt sind und sich zumindest im wesentlichen radial in Richtung auf die Innenmantelfläche (4) des Außenrohres (1) hin erstrecken.

7. Koaxialrohr nach einem der Ansprüche 1 bis 5,
dadurch **gekennzeichnet**,
daß die Abstandshalter (3) in Umfangsrichtung des Koaxialrohres in alternierender Folge an der Innenmantelfläche (4) des Außenrohres (1) angeformt sind und sich zumindest im wesentlichen radial in Richtung auf die Außenmantelfläche (5) des Innenrohres (2) hin erstrecken, und umgekehrt, an der Aussenmantelfläche (5) des Innenrohres (2) angeformt sind und sich zumindest im wesentlichen radial in Richtung auf die Innenmantelfläche (4) des Außenrohres (1) hin erstrecken.

8. Koaxialrohr nach Anspruch 7,
dadurch **gekennzeichnet**,
daß sich die an der Innenmantelfläche (4) des Außenrohres (1) angeformten Abstandshalter (3) und die an der Außenmantelfläche (5) des Innenrohres (2) angeformten Abstandshalter (3) axial hinterschneiden.

9. Verfahren zum Herstellen eines Koaxialrohres nach einem der Ansprüche 1 bis 8,
dadurch **gekennzeichnet**,
daß das Innenrohr (2), insbesondere durch Extrudieren, vorgefertigt, abgekühlt und dann das Außenrohr (1) in situ um das Innenrohr (2) herum, insbesondere durch koaxiale Mantelextrusion, geformt wird.

10. Verwendung des Koaxialrohres nach einem der Ansprüche 1 bis 8 zur pneumatischen Doppelansteuerung von Stellgliedern, insbesondere zur separaten Stell- und Sperransteuerung von Riegelgliedern im Kraftfahrzeugbau.
